# EUROPEAN PATENT APPLICATION

(11) **EP 4 716 309 A1**
(43) Date of publication of application: **25.03.2026**
(21) Application number: 23951199.1
(22) Date of filing: 08.09.2023
(51) Int. Cl.: H04W 52/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN)
(74) Representative: Taor, Simon Edward William
(86) International application number: PCT/CN2023/117702
(87) International publication number: WO 2025/050379

(57) **Abstract**

A wireless communication method and a communication device are provided. The method includes the following. A first core network device receives or sends first information. the first information is used to indicate one or more of: whether a first communication service is supported, and a first energy efficiency mode controlling the first communication service. The first communication service is based on network energy efficiency control. In embodiments of the disclosure, communication devices (for example, including the first core network device) can interact with the first information to indicate whether the communication service (also referred to as the "first communication service") based on network energy efficiency control is supported, and/or, the first energy efficiency mode of the first communication service. Compared with the traditional network energy efficiency control schemes, where it is unable to know which terminal devices and/or QoS flows can have their network energy efficiency controlled and which terminal devices and/or QoS flows cannot have their network energy efficiency controlled, this disclosure helps to improve rationality of the network energy efficiency control, thereby enhancing user experience.

## Description

### TECHNICAL FIELD

The disclosure relates to the field of communication technology, and more specifically, to a wireless communication method and a communication device.

### BACKGROUND

In some communication systems, network management systems can monitor energy efficiency of network devices (also referred to as "network energy efficiency"), so as to know energy efficiency of each device in the entire communication network and control energy efficiency at a network management level. For example, during idle periods, the network management system can turn off some network devices to reduce energy efficiency and improve energy utilization efficiency. However, this way of controlling network energy efficiency may lead to degradation in user experience.

### SUMMARY

The disclosure provides a wireless communication method and a communication device. Various aspects involved in the disclosure are introduced below.

In a first aspect, a wireless communication method is provided. The wireless communication method includes the following. A first core network device receives or sends first information. The first information is used to indicate one or more of: whether a first communication service is supported, and a first energy efficiency mode controlling the first communication service. The first communication service is based on network energy efficiency control.

In a second aspect, a wireless communication method is provided. The wireless communication method includes the following. A second core network device receives or sends first information. The first information is used to indicate one or more of: whether a first communication service is supported, and a first energy efficiency mode controlling the first communication service. The first communication service is based on network energy efficiency control.

In a third aspect, a wireless communication method is provided. The wireless communication method includes the following. A first device sends first information. The first device is a terminal device or an application function (AF). The first information is used to indicate one or more of: whether a first communication service is supported, and a first energy efficiency mode controlling the first communication service. The first communication service is based on network energy efficiency control.

In a fourth aspect, a wireless communication method is provided. The wireless communication method includes the following. An access network (AN) device receives first information sent by a first core network device. The first information is used to indicate one or more of: whether a first communication service is supported, and a first energy efficiency mode controlling the first communication service. The first communication service is based on network energy efficiency control.

In a fifth aspect, a wireless communication method is provided. The wireless communication method includes the following. An AN device receives second information sent by a first core network device. The second information is used to subscribe to a first event associated with first information. The first event is used to determine network energy efficiency.

In a sixth aspect, a communication device is provided. The communication device includes a transceiver, a processor, and a communication interface. The memory is configured to store one or more computer programs. The processor is configured to invoke the computer programs stored in the memory, to cause the communication device to perform some or all of the steps in the method of the first aspect.

In a seventh aspect, a communication system is provided in embodiments of the disclosure. The communication system includes the aforementioned terminal device and/or network device. In another possible design, the system may further include other devices that interact with the terminal device or the network device in the schemes provided in embodiments of the disclosure.

In an eighth aspect, a computer-readable storage medium is provided in embodiments of the disclosure. The computer-readable storage medium is configured to store computer programs. The computer programs are operable with a communication device to perform some or all of the steps in methods of the aforementioned aspects.

In a ninth aspect, a computer program product is provided in embodiments of the disclosure. The computer program product includes a non-transitory computer-readable storage medium storing computer programs. The computer programs are operable with a communication device to perform some or all of the methods in methods of the aforementioned aspects. In some implementations, the computer program product may be a software installation package.

In a tenth aspect, a chip is provided in embodiments of the disclosure. The chip includes a memory and a processor. The processor is configured to invoke and execute computer programs stored in the memory, to perform some or all of the steps in methods of the aforementioned aspects.

In embodiment of the disclosure, communication devices (for example, including the first core network device) can interact first information to indicate whether a communication service (also referred to as "first communication service") based on network energy efficiency control is supported; and/or, to indicate the first energy efficiency mode of the first communication service. Compared with traditional network energy efficiency control schemes, where it is unable to know which terminal devices and/or quality of service (QoS) flows can have their network energy efficiency controlled and which terminal devices and/or energy efficiency QoS flows cannot have their network energy efficiency controlled, this disclosure helps to improve rationality of the network energy efficiency control, thereby enhancing user experience.

### BRIEF DESCRIPTION OF THE DRAWINGS

FIG. 1 is a schematic diagram of a wireless communication system applied in embodiments of the disclosure.
FIG. 2 is a schematic diagram of a wireless communication system applied in embodiments of the disclosure.
FIG. 3 is a schematic flow diagram of a wireless communication method in embodiments of the disclosure.
FIG. 4 is a schematic flow diagram of a transmission scheme of first information in an embodiment of the disclosure.
FIG. 5 is a schematic flow diagram of a transmission scheme of first information in another embodiment of the disclosure.
FIG. 6 is a schematic flow diagram of a transmission scheme of first information in yet another embodiment of the disclosure.
FIG. 7 is a schematic flow diagram of subscribing to a first event in an embodiment of the disclosure.
FIG. 8 is a schematic flow diagram of subscribing to a first event in another embodiment of the disclosure.
FIG. 9 is a schematic diagram of a communication device in embodiments of the disclosure.
FIG. 10 is a schematic diagram of a communication device in embodiments of the disclosure.
FIG. 11 is a schematic diagram of a communication device in embodiments of the disclosure.
FIG. 12 is a schematic diagram of a communication device in embodiments of the disclosure.
FIG. 13 is a schematic diagram of a communication device in embodiments of the disclosure.
FIG. 14 is a schematic structural diagram of a communication apparatus in embodiments of the disclosure.

### DETAILED DESCRIPTION

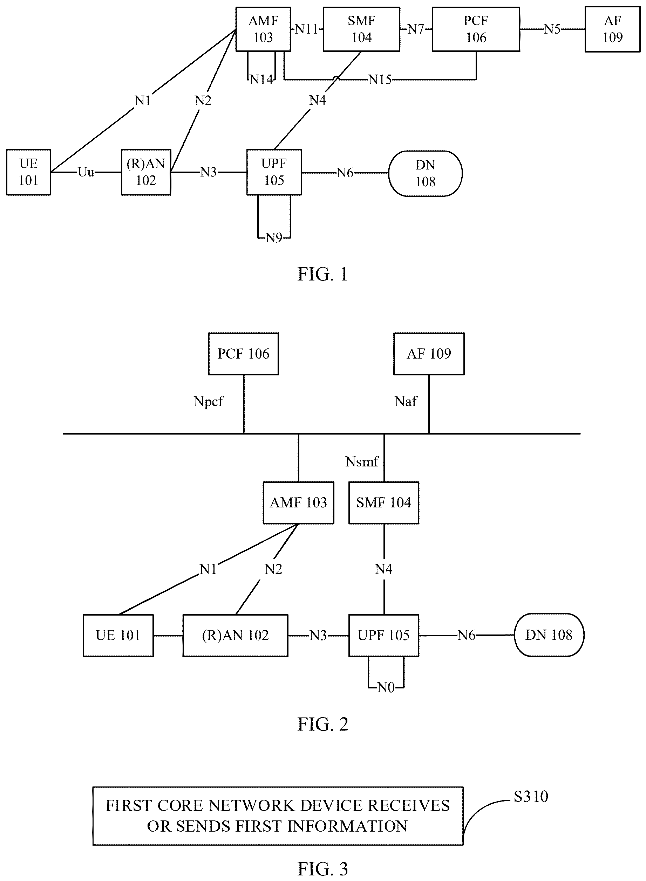

The technical solutions in the disclosure will be described below with reference to the accompanying drawings. To facilitate the understanding of the disclosure, the architectures applicable to embodiments of the disclosure will first be introduced below with reference to FIG. 1 and FIG. 2.

FIG. 1 and FIG. 2 are schematic diagrams of a wireless communication system applicable to embodiments of the disclosure. As illustrated in FIG. 1 and FIG. 2, the 5th generation (5G) system or new radio (NR) network architecture announced by the 3rd generation partnership project (3GPP) standard organization includes: a terminal device 101 (also referred to as "user equipment (UE)"), an access network (AN) device 102 (including radio AN (RAN) or AN) supporting 3GPP technologies, a user plane function (UPF) network element 105, an access and mobility management function (AMF) network element 103, a session management function (SMF) network element 104, a policy control function (PCF) network element 106, an application function (AF) network element 109, and a data network (DN) 108.

It can be noted that FIG. 1 and FIG. 2 only illustrate some network elements exemplarily. In some scenarios, the aforementioned wireless communication system may further include a network slice selection function (NSSF), an authentication server function (AUSF), a unified data management (UDM), etc.

In addition, the network architecture illustrated in FIG. 1 does not constitute a limitation to a 5G network architecture. In specific implementations, the 5G network architecture may include more or less network elements than those illustrated in FIG. 1, or some certain network elements are combined, etc. In addition, the AN or the RAN is represented as "(R)AN" in FIG. 1.

The terminal device 101 can be a UE, a terminal, a handheld terminal, a notebook computer, a subscriber unit, a cellular phone, a smart phone, a wireless data card, a personal digital assistant (PDA) computer, a tablet computer, a wireless modem, a handheld device, a laptop computer, a cordless phone, or a wireless local loop (WLL) station, a machine type communication (MTC) terminal device, a handheld device with wireless communication functions, a computing device, other processing devices coupled with a wireless modem, an unmanned aerial vehicle, an in-vehicle device, a wearable device, a terminal in internet of things, a virtual reality device, a terminal device in a future communication system network (for example, the 6th generation (6G) system), a terminal in a future evolved public land mobile network (PLMN), etc.

The AN device 102 is an access device, through which the terminal device access the network architecture wirelessly, mainly responsible for radio resource management on air interface, quality of service (QoS) management, data compression and encryption, etc. The AN device can be, for example, a base station (NodeB), an evolved base station (eNodeB), a base station in a 5G mobile communication system or an NR communication system, a base station in a future mobile communication system, etc.

The UPF network element 105, the AMF network element 103, the SMF network element 104, and the PCF network element 106 are network elements in the 3GPP core network (or "core network elements" for short). The UPF network element 105 can be referred to as a user plane functional network element, mainly responsible for user data transmission. Other network elements can be referred to as control plane functional network elements, mainly responsible for identification, authentication, registration management, session management, mobility management and policy control, etc., to ensure reliable and stable user data transmission.

The UPF network element 105 (or "UPF" for short) can be used to forward and receive data from the terminal. For example, the UPF network element can receive service data from a data network and transmit the service data to the terminal through the AN device. The UPF network element can further receive user data from the terminal through the AN device and forward the user data to the data network. Transmission resources allocated and scheduled by the UPF network element for the terminal are managed and controlled by the SMF network element. A bearer between the terminal and the UPF network element may include: a user plane connection between the UPF network element and the AN device, and a channel established between the AN device and the terminal. The user plane connection can be a quality of service (QoS) flow established between the UPF network element and the AN device for data transmission.

The AMF network element 103 (or "AMF" for short) manages the terminal accessing to the core network, such as terminal location update, network registration, access control, terminal mobility management, terminal attachment and detachment, etc. When the AMF network element provides service for a session of the terminal, the AMF network element can further provide control plane storage resources for the session to store a session identifier, a SMF network element identifier associated with the session identifier, etc.

The SMF network element 104 (or "SMF" for short) can be used to select the user plane network element for the terminal, re-direct the user plane network element for the terminal, assign an internet protocol (IP) address to the terminal, establish a bearer (also referred to as session) between the terminal and the UPF network element, and perform session modification, session release, and QoS control.

The PCF network element 106 (or "PCF" for short) is used to provide a policy, such as a QoS policy and a slice selection policy, to the AMF network element 103 and the SMF network element 104.

The AF network element 109 (or "AF" for short) is used to interact with the 3GPP core network element to support application-influenced data routing, access network exposure function (NEF), and interact with the PCF network element for policy control, etc.

The DN 108 can provide data service for users through network such as an IP multimedia service (IMS) network and the internet. In the DN 108, there can be various application servers (ASs) to provide different application services, such as operator service, internet access or third-party service, etc. An application server (AS) can implement the function of the AF network element.

The NSSF is used to select a network slice, and supports the following functions: selecting a network slice instance set serving the UE; determining allowed network slice selection assistance information (NSSAI) and, when necessary, determining a mapping to subscribed single-network slice selection assistance information (S-NSSAI); determining the configured NSSAI and, when necessary, determining a mapping to the subscribed S-NSSAI; and determining a AMF set that may be used to query the UE, or determining a list of candidate AMFs based on configuration.

The AUSF is used to receive a request for authenticating the terminal from the AMF 103. The AUSF requests a key from the UDM 107 and then forwards the issued key to the AMF 103 for authentication.

The UDM has functions such as generation and storage of user subscription data, management of authentication data, etc., and supports interaction with an external third-party server.

It can be understood that each network element in FIG. 1 and FIG. 2 can be a network component in a hardware equipment, can be a software function running on a dedicated hardware, or can be a virtualized function instantiated on a platform (for example, a cloud platform). It can be noted that the network architecture illustrated in the aforementioned drawings only exemplarily illustrate the network elements included in the entire network architecture. The network elements included in the entire network architecture are not limited in embodiments of the disclosure. In addition, "network element" and "device" can be used interchangeably in embodiments of the disclosure. For example, the aforementioned core network element can also be referred to as a core network device.

As illustrated in FIG. 1, the network elements are connected in pairs through predefined interfaces, that is, employing a network element interface mode for interaction. The interface between network elements can include, for example, N1 ~ N7 interfaces, an N9 interface, an N11 interface, N14 ~ N15 interfaces, and an Uu interface.

Taking the UE as an example, the UE can establish an access stratum (AS) connection with the AN through the Uu interface to exchange access stratum (AS) messages and perform wireless data transmission. In addition, the UE establishes a non-access stratum (NAS) connection with the AMF through an N1 interface to exchange NAS messages.

Taking the UPF as an example, the UPF performs data transmission with the DN through an N6 interface. In addition, the UPF can perform data transmission with the AN through an N3 interface.

As illustrated in FIG. 2, the network elements interact with each other by invoking services provided by other network elements, that is, employing a mode in which the network elements provide services for interaction. It can be understood that embodiments of the disclosure do not limit the interaction method between network elements, that is, the network elements can employ either an interface-based approach or a service invocation model.

In some communication systems, network management systems can monitor energy efficiency of network devices (also referred to as "network energy efficiency"), so as to know energy efficiency of each device in the entire communication network and control energy efficiency at a network management level. For example, during idle periods, the network management system can turn off some network devices to reduce energy efficiency and improve energy utilization efficiency. Currently, the network management system controls the network energy efficiency at a granularity of network device. That is to say, the network management system controls the network energy efficiency by turning off the entire network device. Therefore, network energy efficiency control at the granularity of network device is also referred to as network device-level energy efficiency control. This kind of network device-level energy efficiency control has relatively coarse control granularity, which may lead to a degradation in user experience.

For example, in order to reduce the network energy efficiency, the network management device turns off one AN device; correspondingly, all services of all terminal devices served (or about to be served) by the AN device will be suspended. For some services with high QoS requirement, the QoS requirement cannot be met, leading to a degradation in user experience.

For another example, in order to reduce the network energy efficiency, the network management device turns off one core network device; correspondingly, all services of all terminal devices served (or about to be served) by the core network device will be suspended. For some services with high QoS requirement, the QoS requirement cannot be met, leading to a degradation in user experience.

Therefore, regarding the aforementioned problems, a scheme for controlling the network energy efficiency is provided in embodiments of the disclosure. In the scheme, the network energy efficiency can be controlled at a control granularity of terminal device and/or QoS flow. Compared with traditional network energy efficiency control at the network device level, this scheme helps to reduce a probability of failing to meet the QoS requirement and improve user experience.

It can be noted that the aforementioned network energy efficiency control at a control granularity of QoS flow can be replaced by network energy efficiency control at a granularity of service data flow. This is because, for different network devices, the QoS flow is manifested through the service data flow. For example, for the PCF, the service data flow has not yet been mapped to the QoS flow; in this case, the network energy efficiency control at the control granularity of QoS flow is the network energy efficiency control at the granularity of service data flow.

However, in the process of controlling the network energy efficiency at the control granularity of terminal device and/or QoS flow, it is unable to know which terminal devices and/or QoS flows can have their network energy efficiency controlled and which terminal devices and/or QoS flows cannot have their network energy efficiency controlled. This leads to unreasonable control of network energy efficiency and cannot effectively improve user experience.

Therefore, regarding the aforementioned problems, a wireless communication method is provided in embodiments of the disclosure. In the method, communication devices can interact first information to indicate whether a communication service (also referred to as "first communication service") based on network energy efficiency control is supported, and/or a first energy efficiency mode of the first communication service. Compared with traditional network energy efficiency control schemes, where it is unable to know which terminal devices and/or QoS flows can have their network energy efficiency controlled and which terminal devices and/or QoS flows cannot have their network energy efficiency controlled, the method helps to improve rationality of network energy efficiency control, thereby enhancing user experience.

In embodiments of the disclosure, the aforementioned communication device may include one or more of: a first core network device, a second core network device, the AN device, the terminal device, and the AF. The first core network device may be, for example, the SMF, or other network devices with functions similar to those of the SMF. The first core network device may be, for example, the AMF, or other network devices with functions similar to those of the AMF. The second core network device may be, for example, the PCF, or other network devices with functions similar to those of the PCF.

The following introduces the wireless communication method in embodiments of the disclosure with reference to FIG. 3, where FIG. 3 is a schematic flow diagram of the wireless communication method in embodiments of the disclosure. The method illustrated in FIG. 3 includes step S310.

Step S310: A first core network device receives or sends first information.

In some implementations, the first information is used to indicate whether the first communication service is supported. The first communication service is based on network energy efficiency control. That is to say, the first information is used to indicate whether the first communication service based on network energy efficiency control is supported. Or in other words, the first information is used to indicate whether permission is given for a network device to consider the network energy efficiency when providing communication service. Therefore, the first information can also be referred to as an "energy efficiency indication".

The implementation of the first information is not limited in embodiments of the disclosure. For example, the first information may occupy 1 bit. If the bit has a first value, it indicates that the first communication service based on network energy efficiency control is supported. If the bit has a second value, it indicates that the first communication service based on network energy efficiency control is not supported. The first value and the second value are different, for example, the first value may be 0 and the second value may be 1. For another example, the first value may be 1 and the second value may be 0.

In other implementations, the first information is used to indicate a first energy efficiency mode controlling the first communication service. The first energy efficiency mode is used to indicate the relative importance between the network energy efficiency control and communication performance.

In some implementations, the first energy efficiency mode may include one or more of: a communication mode in which importance of the network energy efficiency is higher than that of the communication performance, a communication mode in which the network energy efficiency and the communication performance are balanced, and a communication mode in which the network energy efficiency is reduced.

If the first energy efficiency mode is the communication mode in which importance of the network energy efficiency is higher than that of the communication performance, it can be understood as the following. The first energy efficiency mode indicates that, between the network energy efficiency and the communication performance, the importance of communication performance is higher than that of the network energy efficiency control. Therefore, the energy efficiency mode can also be referred to as a "performance-priority mode".

It can be noted that in the communication mode, the network energy efficiency may not be considered at all, or the network energy efficiency may be given less priority. Embodiments of the disclosure are not limited in this regard.

If the first energy efficiency mode is the communication mode in which the network energy efficiency and the communication performance are balanced, it can be understood as the following. The first energy efficiency mode indicates that, between the network energy efficiency and the communication performance, the importance of the communication performance is comparable to the importance of the network energy efficiency control. Therefore, the energy efficiency mode can also be referred to as a "balanced energy efficiency and performance mode".

If the first energy efficiency mode is the communication mode in which the network energy efficiency and the communication performance are balanced, it can be understood that the first energy efficiency mode indicates that, between the network energy efficiency and the communication performance, the importance of the communication performance is lower than that of the network energy efficiency control. Therefore, the energy efficiency mode can also be referred to as an "energy efficiency-priority mode".

It can be noted that one or more of the aforementioned energy efficiency modes can be determined based on one or more of: pre-defined information, configuration information from the network device, and pre-configured information.

In embodiments of the disclosure, the first information indicating whether the first communication service is supported and the first information indicating the first energy efficiency mode controlling the first communication service may be independent pieces of information, or may be information transmitted independently. Of course, in embodiments of the disclosure, the aforementioned two types of first information can be used in combination. For example, if the first information indicates the first energy efficiency mode controlling the first communication service, it may implicitly indicate that the first communication service is supported. In this case, in order to reduce an overhead for transmitting the first information, the first information may not specifically indicate whether the first communication service is supported through additional bits.

An energy efficiency control granularity associated with the first information is not limited in embodiments of the disclosure. In some implementations, the first information is associated with a terminal device. In this case, the first information is used to indicate whether the terminal device supports the first communication service; and/or, to indicate the first energy efficiency mode controlling the first communication service. That is to say, in embodiments of the disclosure, an energy efficiency control granularity of network energy efficiency can be the control granularity of terminal device.

In other implementations, the first information is associated with a service data flow. In this case, the first information is used to indicate whether the service data flow supports the first communication service; and/or, to indicate the first energy efficiency mode controlling the first communication service. That is to say, in embodiments of the disclosure, the energy efficiency control granularity of network energy efficiency can be a control granularity of service data flow.

Of course, in embodiments of the disclosure, the aforementioned first information can be associated with the network device. In this case, the energy efficiency control granularity of network energy efficiency can be a control granularity of network device.

The above introduces the first information in embodiments of the disclosure, and the following will introduce a scheme of transmitting the first information in embodiments of the disclosure.

In some implementations, the first information may be sent by the terminal device to the first core network device. That is to say, the aforementioned step S310 may include the following. The first core network device receives the first information sent by the terminal device.

In some implementations, the first information is carried in the NAS message. The NAS message may include a first request message. The first request message includes one or more of: a request message for requesting to register the terminal device, a request message for requesting to establish a protocol data unit (PDU) session, and a request message for requesting to modify the PDU session.

In some implementations, if the first information is carried in the request message for requesting to register the terminal device (also referred to as a "registration request"), a control granularity associated with the first information may be a terminal device for which registration is requested in the registration request. That is to say, first information carried in the registration request is used to indicate whether the terminal device supports the first communication service; and/or, to indicate the first energy efficiency mode controlling the first communication service of the terminal device.

In other implementations, if the first information is carried in the request message for requesting to establish a PDU session (also referred to as a "PDU session establishment request"), the control granularity associated with the first information may be a service data flow in the PDU session. That is to say, the first information carried in the PDU session establishment request is used to indicate whether the service data flow supports the first communication service; and/or, to indicate the first energy efficiency mode controlling the first communication service associated with the service data flow.

Indication information of the service data flow is not limited in embodiments of the disclosure. In some implementations, the PDU session establishment request may carry the indication information of the service data flow. For example, the indication information of the service data flow may be a filter of the service data flow. For another example, the indication information of the service data flow may be an application identifier of the service data flow. For yet another example, the indication information of the service data flow may be a service identifier of the service data flow.

In other implementations, if the first information is carried in the request message for requesting to modify the PDU session (also referred to as a "PDU session modification request"), the control granularity associated with the first information may be the service data flow in the PDU session. That is to say, the first information carried in the PDU session modification request is used to indicate whether the service data flow supports the first communication service; and/or, to indicate the first energy efficiency mode controlling the first communication service associated with the service data flow.

The indication information of the service data flow is not limited in embodiments of the disclosure. In some implementations, the PDU session modification request may carry the indication information of the service data flow. For example, the indication information of the service data flow may be the filter of the service data flow. For another example, the indication information of the service data flow may be the application identifier of the service data flow. For yet another example, the indication information of the service data flow may be the service identifier of the service data flow.

In some scenarios, the first core network device can send the first information to the second core network device for authorization. That is to say, the first information is authorized information. The aforementioned step S310 includes the following. The first core network device sends a second request to the second core network device. The second request is used to request authorization for unauthorized first information. The aforementioned method further includes the following. The first core network device receives a response message sent by the second core network device. The response message carries the first information.

It can be noted that, as mentioned above, the first core network device may send the first information to the second core network device for authorization. Of course, in embodiments of the disclosure, the first core network device may not send the first information to the second core network device for authorization.

In some implementations, the first core network device may send the first information to the AN device, so that the AN device can control the network energy efficiency based on the first information. That is to say, the aforementioned step S310 includes the following. The first core network device sends the first information to the AN device.

The manner in which the AN device controls the network energy efficiency is not limited in embodiments of the disclosure. In some implementations, if the first information indicates the first energy efficiency mode, and the first information is associated with the terminal device, the AN device can schedule a wireless resource of the terminal device based on the first energy efficiency mode. For example, if the first energy efficiency mode indicates reducing the network energy efficiency, when the network energy efficiency is relatively high, the AN device can delay data transmission of the terminal device, thereby reducing the network energy efficiency.

In other implementations, if the first information indicates that the first communication service is supported, and the first information is associated with the terminal device, the AN device can schedule the wireless resource of the terminal device based on the network energy efficiency. For example, if the first information indicates that the first communication service is supported, when the network energy efficiency is relatively high, the AN device can delay the data transmission of the terminal device, thereby reducing the network energy efficiency.

It can be noted that the network energy efficiency can be determined based on one or more of: energy efficiency of the AN device, energy efficiency of an AN device in providing transmission service for the terminal device, and energy efficiency of the terminal device. Embodiments of the disclosure are not limited in this regard. The energy efficiency of the terminal device can be determined based on wireless signal quality. Generally, the worse the wireless signal quality, the higher the energy efficiency of the terminal device. Conversely, the better the wireless signal quality, the lower the energy efficiency of the terminal device.

In some implementations, if the first information indicates the first energy efficiency mode, and the first information is associated with the QoS flow, the AN device can schedule a wireless resource of the QoS flow based on the first energy efficiency mode. For example, if the first energy efficiency mode indicates reducing the network energy efficiency, when the network energy efficiency is relatively high, the AN device can delay data transmission of the QoS flow, thereby reducing the network energy efficiency.

In other implementations, if the first information indicates that the first communication service is supported, and the first information is associated with the QoS flow, the AN device can schedule the wireless resource of the terminal device based on the network energy efficiency. For example, if the first information indicates that the first communication service is supported, when the network energy efficiency is relatively high, the AN device can delay the data transmission of the QoS flow, thereby reducing the network energy efficiency.

It can be noted that the network energy efficiency can be determined based on one or more of: energy efficiency of the AN device, energy efficiency of an AN device in providing transmission service for the QoS flow, and energy efficiency of a terminal device associated with the QoS flow. Embodiments of the disclosure are not limited in this regard.

In addition, in embodiment of the disclosure, the above introduced the method for controlling the network energy efficiency with examples of delaying data transmission, and embodiments of the disclosure are not limited in this regard. In some implementations, the AN device can control the network energy efficiency by adjusting other QoS parameters. For example, the AN device can reduce the network energy efficiency by increasing a bit error rate of the QoS flow. For another example, the AN device can reduce the network energy efficiency by increasing a bit error rate of the terminal device.

In embodiments of the disclosure, the aforementioned first information may be first information authorized by the second core network device. Of course, for scenarios where the first core network device does not send the first information to the second core network device for authorization, the aforementioned first information may be first information not authorized by the second core network device. In this case, the first core network device may forward the first information sent by the terminal device to the AN device.

In some implementations, the first information sent by the aforementioned first core network device to the AN device may be carried in a third request message. The third request message includes one or more of: a request message for requesting to establish contextual information of the terminal device, a request message for requesting to modify contextual information of the terminal device, a request message for requesting to establish a QoS flow, and a request message for requesting to modify a QoS flow.

In some implementations, if the first information is carried in the request message for requesting to establish contextual information of the terminal device (also referred to as "UE context establishment request"), the control granularity associated with the first information may be a terminal device associated with the UE context establishment request. That is to say, the first information carried in the UE context establishment request is used to indicate whether the terminal device supports the first communication service; and/or, to indicate a first energy efficiency mode controlling the first communication service of the terminal device.

In other implementations, if the first information is carried in the request message for requesting to modify contextual information of the terminal device (also referred to as "UE context modification request"), the control granularity associated with the first information may be a terminal device associated with the UE context modification request. That is to say, the first information carried in the UE context modification request is used to indicate whether the terminal device supports the first communication service; and/or, to indicate the first energy efficiency mode controlling the first communication service of the terminal device.

In other implementations, if the first information is carried in the request message for requesting to establish a QoS flow (also referred to as a "QoS flow establishment request"), the control granularity associated with the first information may be a QoS flow associated with the QoS flow establishment request. That is to say, the first information carried in the QoS flow establishment request is used to indicate whether the first communication service is supported by the service data flow; and/or, to indicate a first energy efficiency mode controlling the first communication service associated with the service data flow.

In other implementations, if the first information is carried in the request message for requesting to modify a QoS flow (also referred to as a "QoS flow modification request"), the control granularity associated with the first information may be a QoS flow associated with the QoS flow modification request. That is to say, the first information carried in the QoS flow modification request is used to indicate whether the service data flow supports the first communication service; and/or, to indicate the first energy efficiency mode controlling the first communication service associated with the service data flow.

To facilitate understanding, the following will describe a scheme in which the terminal device sends the first information in embodiments of the disclosure with reference to Embodiment 1 and Embodiment 2.

### Embodiment 1

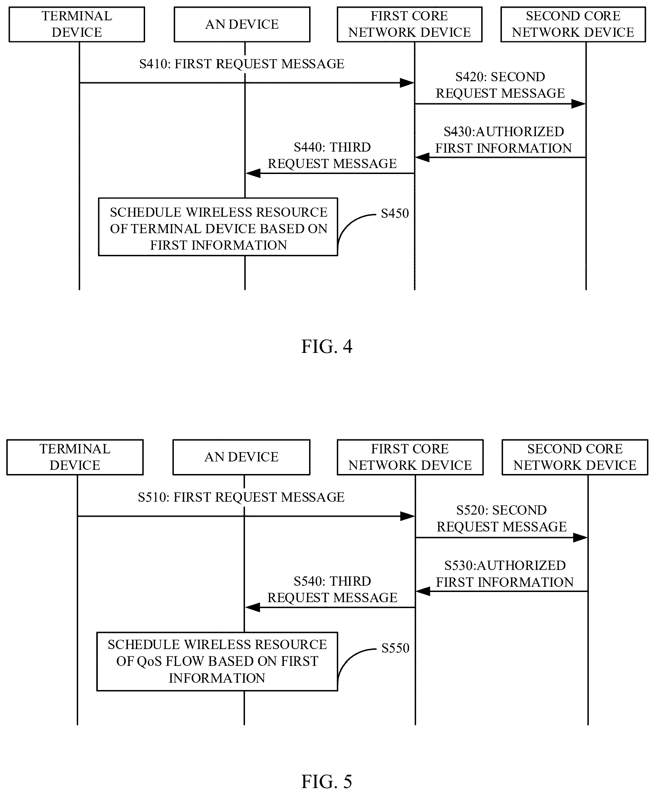

It is assumed that first information is associated with a terminal device. FIG. 4 is a schematic flow diagram of a transmission scheme of the first information in an embodiment of the disclosure. The method illustrated in FIG. 4 includes steps S410 to S450.

Step S410: the terminal device sends a first request message to a first core network device. The first request message carries the first information.

In some implementations, the first request message may include a registration request, and for details, reference can be made to the above introduction of the first request message.

Step S420: the first core network device sends a second request message to a second core network device to request authorization for the first information.

Step S430: the second core network device sends authorized first information to the first core network device.

Step S440: the first core network device sends a third request message to an AN device. The third request message carries the authorized first information.

In some implementations, the third request message may include a UE context establishment request or a UE context modification request. That is to say, a terminal device identifier in the third request is transmitted to the AN device together with the first information, and is used to indicate whether a terminal device indicated by the terminal device identifier supports the first communication service, and/or, to indicate a first energy efficiency mode controlling the first communication service of the terminal device.

Step S450: the AN device schedules a wireless resource of the terminal device based on the first information.

In some implementations, the AN device schedules the wireless resource of the terminal device according to network energy efficiency. For example, when the network energy efficiency is relatively high, data transmission of the terminal device is delayed, thereby reducing energy efficiency of the AN device without affecting service transmission of other terminal devices. High network energy efficiency may include one or more of: the AN device has high energy efficiency, the terminal device has high energy efficiency, and providing transmission service for the terminal device has high energy efficiency.

### Embodiment 2

It is assumed that first information is associated with a QoS flow. FIG. 5 is a schematic flow diagram of a transmission scheme of the first information in another embodiment of the disclosure. The method illustrated in FIG. 5 includes steps S510 to S550.

Step S510: A terminal device sends a first request message to a first core network device. The first request message carries the first information.

In some implementations, the first request message may include a PDU session establishment request or a PDU session modification request, and for details, reference can be made to the above introduction of the first request message.

Step S520: the first core network device sends a second request message to a second core network device to request authorization for the first information.

Step S530: the second core network device sends authorized first information to the first core network device.

Step S540: the first core network device sends a third request message to an AN device. The third request message carries the authorized first information.

In some implementations, the third request message may include a QoS flow establishment request or a QoS flow modification request. That is to say, a QoS identifier in the third request is transmitted to the AN device together with the first information, and is used to indicate whether a QoS flow indicated by the QoS identifier supports the first communication service, and/or, to indicate a first energy efficiency mode controlling the first communication service associated with the QoS flow.

Step S550: the AN device schedules a wireless resource of the QoS flow based on the first information.

In some implementations, the AN device schedules the wireless resource of the QoS flow according to network energy efficiency situation. For example, when the network energy efficiency is relatively high, data transmission of the QoS flow is delayed, thereby reducing energy efficiency of the AN device without affecting service transmission of other QoS flows. High network energy efficiency may include one or more of: the AN device has high energy efficiency, the terminal device has high energy efficiency, and providing transmission service for a QoS flow of the terminal device has high energy efficiency.

The above introduces the scheme for the terminal device to send the first information in embodiments of the disclosure with reference to Embodiment 1 and Embodiment 2. In some scenarios, the first information may be sent by an AF, and in this case, the first information may be associated with a service data flow. In some implementations, when the AF sends the first information, indication information of the service data flow associated with the first information may also be carried.

The indication information of the service data flow is not limited in embodiments of the disclosure. For example, the indication information of the service data flow may be a filter of the service data flow. For another example, the indication information of the service data flow may be an application identifier of the service data flow. For yet another example, the indication information of the service data flow may be a service identifier of the service data flow.

In some implementations, the AF can send the first information to the first core network device through the second core network device. That is to say, the aforementioned step S310 includes the following. The first core network device receives the first information sent by the second core network device.

In some implementations, the first information received by the first core network device from the second core network device may be authorized by the second core network device. Of course, in embodiments of the disclosure, the second core network device may forward the first information directly to the first core network device without authorizing the first information.

In some implementations, when the second core network device sends the first information to the first core network device, the indication information of the service data flow associated with the first information can also be indicated. For the indication information of the service data flow, reference can be made to the above introduction.

In some implementations, after the first core network device receives the first information, the first core network device can map the service data flow associated with the first information to the QoS flow. In this case, first information associated with the service data flow is transformed into first information associated with the QoS flow. That is to say, the above method further includes the following. The first core network device determines a QoS flow associated with the service data flow. The first core network device associates the first information with the QoS flow.

In some implementations, the first core network device can send the first information associated with the QoS flow to the AN device. That is to say, the aforementioned step S310 includes the following. The first core network device sends the first information to the AN device. The first information is associated with the QoS flow.

In some implementations, the first information sent by the first core network device to the AN device may be carried in the third request message. The third request message includes one or more of: a request message for requesting to establish a QoS flow, and a request message for requesting to modify a QoS flow. For the third request message, reference can be made to the above introduction, and details are not repeated herein for brevity.

To facilitate understanding, the following will describe a scheme in which the AF sends the first information in embodiments of the disclosure with reference to Embodiment 3.

### Embodiment 3

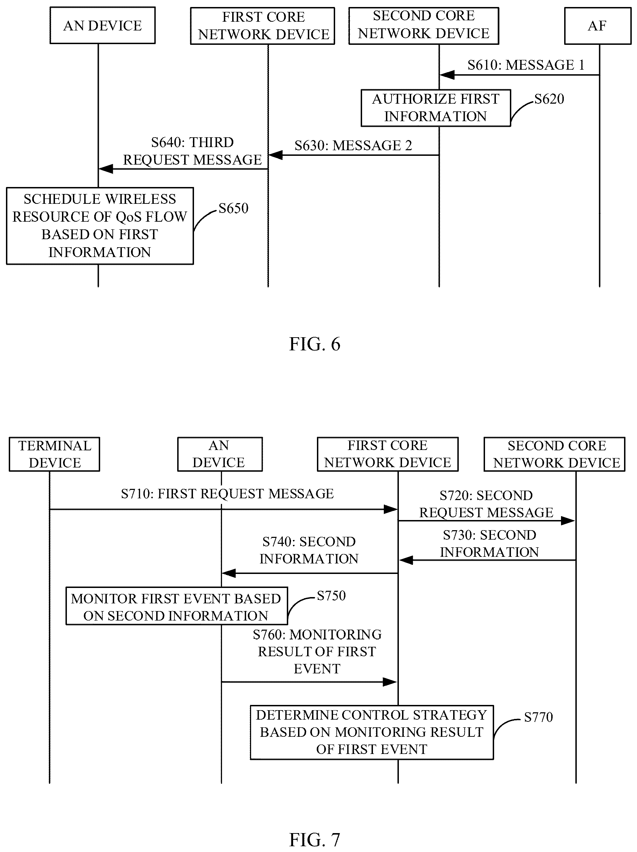

It is assumed that first information is associated with a QoS flow, or the first information is associated with a service data flow. FIG. 6 is a schematic flow diagram of a transmission scheme of the first information in yet another embodiment of the disclosure. The method illustrated in FIG. 6 includes steps S610 to S650.

Step S610: an AF sends message 1 to a second core network device. The message 1 carries the first information and indication information of the service data flow associated with the first information.

The indication information of the service data flow is not limited in embodiments of the disclosure. For example, the indication information of the service data flow may be a filter of the service data flow. For another example, the indication information of the service data flow may be an application identifier of the service data flow. For yet another example, the indication information of the service data flow may be a service identifier of the service data flow.

Step S620: the second core network device authorizes the first information.

Step S630: the second core network device sends message 2 to a first core network device. The message 2 carries authorized first information and the indication information of the service data flow associated with the first information.

Step S640: the first core network device sends a third request message to an AN device. The third request message carries the authorized first information. The first information is associated with the QoS flow.

In some implementations, the third request message may include a QoS flow establishment request or a QoS flow modification request.

In some implementations, the first core network element binds, according to the first information of the service data flow, the service data flow to a QoS flow with the same first information for transmission, carries the first information in the QoS flow establishment request or the QoS flow modification request, and sends the request together with the QoS flow identifier to the AN device, so as to indicate that energy efficiency situation can be considered when transmitting the QoS flow.

Step S650: the AN device schedules a wireless resource of the QoS flow based on the first information.

In some implementations, the AN device schedules the wireless resource of the QoS flow according to network energy efficiency. For example, when the network energy efficiency is relatively high, data transmission of the QoS flow is delayed, thereby reducing energy efficiency of the AN device without affecting service transmission of other QoS flows. High network energy efficiency may include one or more of: the AN device has high energy efficiency, the terminal device has high energy efficiency, and providing transmission service for a QoS flow of the terminal device has high energy efficiency.

The above introduces a scheme in which the AN device schedules the wireless resource based on the first information in embodiments of the disclosure with reference to Embodiment 1 to Embodiment 3. In some scenarios, the first core network device may not forward the first information to the AN device; instead, the first core network device may subscribe to a first event (also referred to as an "energy efficiency event") used to determine the network energy efficiency from the AN device, to monitor the network energy efficiency.

In some implementations, the first event includes one or more of: an event for monitoring energy efficiency of the terminal device, an event for monitoring energy efficiency of an AN device serving the terminal device, an event for monitoring energy efficiency in providing service transmission for the terminal device, an event for monitoring energy efficiency in providing service transmission for some or all terminal devices associated with a QoS flow, and an event for monitoring energy efficiency of a network slice associated with a QoS flow.

Taking the event for monitoring energy efficiency of the terminal device as an example, in some implementations, the event may include that the energy efficiency of the terminal device is higher than an energy efficiency threshold. In other implementations, the event may include that the energy efficiency of the terminal device is within an energy efficiency range.

Taking the event for monitoring energy efficiency of an AN device serving the terminal device as an example, in some implementations, the event may include that the energy efficiency of the AN device is higher than the energy efficiency threshold. In other implementations, the event may include that the energy efficiency of the AN device is within the energy efficiency range.

Taking the event for monitoring energy efficiency in providing service transmission for the terminal device as an example, in some implementations, the event may include that the energy efficiency in providing service transmission for the terminal device is higher than the energy efficiency threshold. In other implementations, the event may include that the energy efficiency in providing service transmission for the terminal device is within the energy efficiency range.

Taking the event for monitoring energy efficiency in providing service transmission for some or all terminal devices associated with a QoS flow as an example, in some implementations, the event may include that the energy efficiency in providing service transmission for some or all terminal devices associated with a QoS flow is higher than the energy efficiency threshold. In other implementations, the event may include that the energy efficiency in providing service transmission for some or all terminal devices associated with a QoS flow is within the energy efficiency range.

Taking the event for monitoring energy efficiency of a network slice associated with a QoS flow as an example, in some implementations, the event may include that the energy efficiency of the network slice associated with a QoS flow is higher than the energy efficiency threshold. In other implementations, the event may include that the energy efficiency of the network slice associated with a QoS flow is within the energy efficiency range.

In embodiments of the disclosure, the aforementioned energy efficiency range and/or energy efficiency threshold may be configured based on one or more of the following information: pre-defined information, pre-configured information, and configuration information from the network device.

In some implementations, the aforementioned subscribing to the first event may be triggered based on the first information. That is to say, the aforementioned step S310 includes the following. The first core network device sends the first information to the second core network device. The aforementioned method further includes the following. The first core network device receives second information sent by the second core network device. The second information is used to subscribe to a first event associated with the first information.

In some implementations, the first core network device may indicate to the AN device to subscribe to the first event. That is to say, the aforementioned method further includes the following. The first core network device sends the second information to the AN device. Of course, in embodiments of the disclosure, the AN device may determine the first event through pre-definition, pre-configuration, or other means. In this case, to reduce overhead for signaling transmission, the first core network device may not send the second information to the AN device.

In some implementations, after the AN device receives the second information, the AN device can monitor the first event, and send a monitoring result of the first event to the second core network device through third information, so that the second core network device can implement a control strategy for adjusting the network energy efficiency based on the monitoring result. That is to say, the aforementioned method further includes the following. The first core network device receives the third information sent by the AN device, and the third information includes the monitoring result of the first event; and/or, the first core network device sends the third information to the second core network device, and the third information is used to determine the control strategy.

The monitoring result is not limited in embodiments of the disclosure. For example, the monitoring result of the first event may be used to indicate an occurrence of the first event. For another example, the monitoring result of the first event may be used to indicate network energy efficiency associated with the first event. Taking the first event being an event for monitoring energy efficiency of the terminal device as an example, the monitoring result may include the energy efficiency of the terminal device. Taking the first event being an event for monitoring energy efficiency of an AN device serving the terminal device as an example, the monitoring result may include the energy efficiency of the AN device serving the terminal device. Taking the first event being an event for monitoring energy efficiency in providing service transmission for the terminal device as an example, the monitoring result may include the energy efficiency in providing service transmission for the terminal device. Taking the first event being an event for monitoring energy efficiency in providing service transmission for some or all terminal devices associated with a QoS flow as an example, the monitoring result may include the energy efficiency in providing service transmission for some or all terminal devices associated with a QoS flow. Taking the first event being an event for monitoring energy efficiency of a network slice associated with a QoS flow as an example, the monitoring result may include the energy efficiency of the network slice associated with a QoS flow.

The control strategy is not limited in embodiments of the disclosure. In some implementations, the control strategy may include a QoS control strategy. That is to say, the second core network device can adjust the network energy efficiency by adjusting a QoS parameter. For example, the second core network device can increase transmission delay in the QoS parameter, so as to reduce the network energy efficiency. For another example, the second core network device can increase a bit error rate in the QoS parameter, so as to reduce the network energy efficiency. In other implementations, the control strategy may include a gating control strategy. That is to say, the second core network device can control the network energy efficiency by controlling turn-on or turn-off of the gate to adjust data transmission. For example, the second core network device can use the gating control strategy to block data transmission, so as to reduce energy efficiency in transmission.

To facilitate understanding, the following will describe a scheme of subscribing to the first event in embodiments of the disclosure with reference to Embodiment 4 and Embodiment 5.

### Embodiment 4

It is assumed that first information is associated with a terminal device. FIG. 7 is a schematic flow diagram of subscribing to a first event in an embodiment of the disclosure. The method illustrated in FIG. 7 includes steps S710 to S770.

Step S710: the terminal device sends a first request message to a first core network device. The first request message carries the first information.

In some implementations, the first request message may include a registration request, and for details, reference can be made to the above introduction of the first request message.

Step S720: the first core network device sends a second request message to a second core network device to request authorization for the first information.

Step S730: the second core network device sends second information to the first core network device. The second information is used to subscribe to a first event associated with the first information. For details of the first event, reference can be made to the above introduction.

Step S740: the first core network device sends the second information to an AN device.

Step S750: the AN device monitors the first event based on the second information.

For example, when the first event occurs, the first event is reported to the first core network element. Herein, the occurrence of the first event may include that energy efficiency of the AN device is greater than an energy efficiency threshold, or may include that energy efficiency of an AN device in providing transmission service for the terminal device is greater than the energy efficiency threshold.

Step S760: the first core network device sends a monitoring result of the first event to the second core network device.

Step S770: the second core network device determines a control strategy based on the monitoring result of the first event.

In some implementations, the control strategy may include a QoS control strategy. That is to say, the second core network device can adjust network energy efficiency by adjusting a QoS parameter of the terminal device. For example, the second core network device can increase transmission delay in the QoS parameter of the terminal device, so as to reduce the network energy efficiency. For another example, the second core network device can increase a bit error rate in the QoS parameter of the terminal device, so as to reduce the network energy efficiency.

In other implementations, the control strategy may include a gating control strategy. That is to say, the second core network device can control the network energy efficiency by controlling turn-on or turn-off of the gate to adjust data transmission. For example, the second core network device can use the gating control strategy to block data transmission of the terminal device, so as to reduce energy efficiency in transmission.

### Embodiment 5

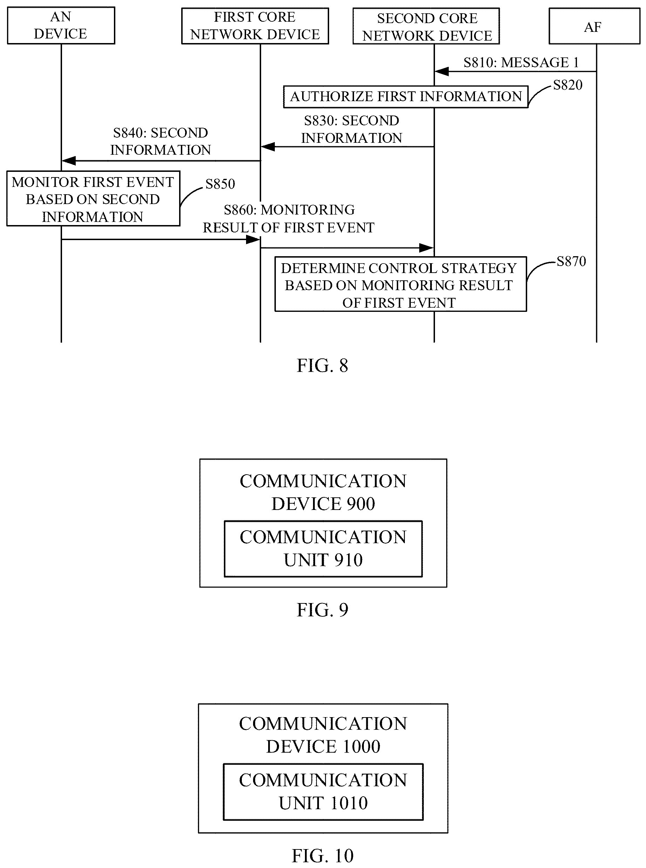

It is assumed that first information is associated with a QoS flow, or the first information is associated with a service data flow. FIG. 8 is a schematic flow diagram of subscribing to a first event in another embodiment of the disclosure. The method illustrated in FIG. 8 includes steps S810 to S870.

Step S810: an AF sends message 1 to a second core network device. The message 1 carries the first information and indication information of a service data flow associated with the first information.

The indication information of the service data flow is not limited in embodiments of the disclosure. For example, the indication information of the service data flow may be a filter of the service data flow. For another example, the indication information of the service data flow may be an application identifier of the service data flow. For yet another example, the indication information of the service data flow may be a service identifier of the service data flow.

Step S820: the second core network device authorizes the first information.

Step S830: the second core network device sends second information to a first core network device. The second information is used to subscribe to the first event associated with the first information. For details of the first event, reference can be made to the above introduction.

Step S840: the first core network device sends the second information to an AN device.

Step S850: the AN device monitors the first event based on the second information.

For example, when the first event occurs, the first event is reported to the first core network element. The occurrence of the first event may include that energy efficiency of the AN device is greater than an energy efficiency threshold, or may include that energy efficiency of the AN device in providing transmission service for the QoS flow is greater than the energy efficiency threshold.

Step S860: the AN device sends a monitoring result of the first event to the second core network device through the first core network device.

Step S870: the second core network device determines a control strategy based on the monitoring result of the first event.

In some implementations, the control strategy may include a QoS control strategy. That is to say, the second core network device can adjust network energy efficiency by adjusting a QoS parameter of the service data flow. For example, the second core network device can increase a transmission delay in the QoS parameter of the service data flow, so as to reduce the network energy efficiency. For another example, the second core network device can increase a bit error rate in the QoS parameter of the service data flow, so as to reduce the network energy efficiency.

In other implementations, the control strategy may include a gating control strategy. That is to say, the second core network device can control the network energy efficiency by controlling turn-on or turn-off of the gate to adjust data transmission. For example, the second core network device can use the gating control strategy to block data transmission of the service data flow, so as to reduce energy efficiency in transmission.

The above describes the method embodiments of the disclosure in detail with reference to FIG. 1 to FIG. 8. The following will describe the apparatus embodiments of the disclosure in detail with reference to FIG. 9 to FIG. 14. It can be understood that the description of the method embodiments corresponds to the description of the apparatus embodiments. Therefore, for the parts not described in detail, reference can be made to the previous method embodiments.

FIG. 9 is a schematic diagram of a communication device in embodiments of the disclosure. A communication device 900 illustrated in FIG. 9 is a first core network device. The communication device 900 includes a communication unit 910.

The communication unit 910 is configured to receive or send first information. The first information is used to indicate one or more of: whether a first communication service is supported, and a first energy efficiency mode controlling the first communication service. The first communication service is based on network energy efficiency control.

In some implementations, the communication unit is configured to receive the first information sent by a terminal device. The first information is associated with the terminal device, or the first information is associated with a service data flow.

In some implementations, the first information is carried in a first request message. The first request message includes one or more of: a request message for requesting to register the terminal device, a request message for requesting to establish a PDU session, and a request message for requesting to modify a PDU session.

In some implementations, the first information is authorized information. The communication unit is configured to send a second request message to a second core network device, and the second request message is used to request authorization for unauthorized first information. The communication unit is configured to receive a response message sent by the second core network device, and the response message carries the first information.

In some implementations, the communication unit is configured to receive the first information sent by the second core network device. The first information is associated with the service data flow.

In some implementations, the first information has been authorized by the second core network device.

In some implementations, the communication unit is configured to send the first information to an AN device. The first information is associated with the terminal device, or the first information is associated with a QoS flow.

In some implementations, the first information is carried in a third request message. The third request message includes one or more of: a request message for requesting to establish contextual information of the terminal device, a request message for requesting to modify contextual information of the terminal device, a request message for requesting to establish a QoS flow, and a request message for requesting to modify a QoS flow.

In some implementations, the communication device further includes a processing unit. The processing unit is configured to determine a QoS flow associated with the service data flow, and to associate the first information with the QoS flow.

In some implementations, the communication unit is configured to send the first information to the second core network device, and to receive second information sent by the second core network device. The second information is used to subscribe to a first event associated with the first information. The first event is used to determine the network energy efficiency.

In some implementations, the communication unit is configured to send the second information to the AN device.

In some implementations, the communication unit is configured to receive third information sent by the AN device, and the third information includes a monitoring result of the first event. And/or, the communication unit is configured to send the third information to the second core network device, the third information is used to determine a control strategy, and the control strategy is used to adjust the network energy efficiency.

In some implementations, the first event includes one or more of: an event for monitoring energy efficiency of the terminal device, an event for monitoring energy efficiency of an AN device serving the terminal device, an event for monitoring energy efficiency in providing service transmission for the terminal device, an event for monitoring energy efficiency in providing service transmission for some or all terminal devices associated with a QoS flow, and an event for monitoring energy efficiency of a network slice associated with a QoS flow. The terminal device is associated with the first information, and/or the QoS flow is associated with the first information.

In some implementations, the first energy efficiency mode includes one or more of: a communication mode in which importance of the network energy efficiency is higher than that of communication performance, a communication mode in which the network energy efficiency and the communication performance are balanced, and a communication mode in which the network energy efficiency is reduced.

FIG. 10 is a schematic diagram of a communication device in embodiments of the disclosure. A communication device 1000 illustrated in FIG. 10 is a second core network device. The communication device 1000 includes a communication unit 1010.

The communication unit 1010 is configured to receive or send first information. The first information is used to indicate one or more of: whether a first communication service is supported, and a first energy efficiency mode controlling the first communication service. the first communication service is based on network energy efficiency control.

In some implementations, the communication unit is configured to receive the first information sent by a first core network device. The first information is associated with a terminal device, or the first information is associated with a service data flow.

In some implementations, the first information is authorized information. The communication unit is configured to receive a second request message sent by the first core network device, and the second request message is used to request authorization for unauthorized first information. The communication unit is configured to send a response message to the first core network device, and the response message carries the first information.

In some implementations, the communication unit is configured to receive the first information sent by an AF. The first information is associated with the service data flow.

In some implementations, the communication unit is configured to send the first information to the first core network device. The first information is associated with the service data flow.

In some implementations, the first information has been authorized by the second core network device.

In some implementations, if the second core network device receives the first information, the communication unit is configured to send second information to the first core network device. The second information is used to subscribe to a first event associated with the first information, and the first event is used to determine the network energy efficiency.

In some implementations, the communication unit is configured to receive the first information sent by the first core network device, or to receive the first information sent by the AF.

In some implementations, the communication unit is configured to receive third information sent by the first core network device, and the third information carries a monitoring result of the first event. The communication unit is configured to determine a control strategy based on the third information, and the control strategy is used to adjust the network energy efficiency.

In some implementations, the first event includes one or more of: an event for monitoring energy efficiency of the terminal device, an event for monitoring energy efficiency of an AN device serving the terminal device, an event for monitoring energy efficiency in providing service transmission for the terminal device, an event for monitoring energy efficiency in providing service transmission for some or all terminal devices associated with a QoS flow, and an event for monitoring energy efficiency of a network slice associated with a QoS flow. The terminal device is associated with the first information, and/or the QoS flow is associated with the first information.

In some implementations, the first energy efficiency mode includes one or more of: a communication mode in which importance of the network energy efficiency is higher than that of communication performance, a communication mode in which the network energy efficiency and the communication performance are balanced, and a communication mode in which the network energy efficiency is reduced.

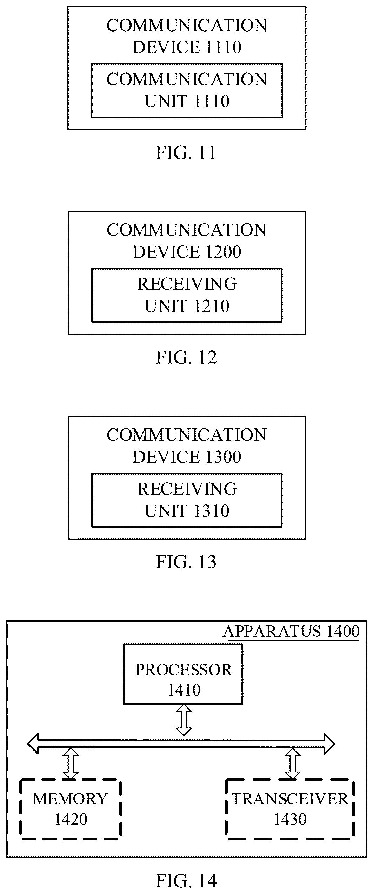

FIG. 11 is a schematic diagram of a communication device in another embodiment of the disclosure. A communication device 1110 illustrated in FIG. 11 is a first device. The first device includes a communication unit 1110.

The communication unit 1110 is configured to send first information. The first device is a terminal device or an AF, and the first information is used to indicate one or more of: whether a first communication service is supported, and a first energy efficiency mode controlling the first communication service. The first communication service is based on network energy efficiency control.

In some implementations, if the first device is the terminal device, the communication unit is configured to send the first information to a first core network device. The first information is associated with the terminal device, or the first information is associated with a service data flow.

In some implementations, if the first device is the AF, the communication unit is configured to send the first information to a second core network device. The first information is associated with a service data flow.

In some implementations, the first energy efficiency mode includes one or more of: a communication mode in which importance of the network energy efficiency is higher than that of communication performance, a communication mode in which the network energy efficiency and the communication performance are balanced, and a communication mode in which the network energy efficiency is reduced.

FIG. 12 is a schematic diagram of a communication device in yet another embodiment of the disclosure. A communication device 1200 illustrated in FIG. 12 is an AN device. The communication device 1200 includes a receiving unit 1210.

The receiving unit 1200 is configured to receive first information sent by a first core network device. The first device is a terminal device or an AF. The first information is used to indicate one or more of: whether a first communication service is supported, and a first energy efficiency mode controlling the first communication service. The first communication service is based on network energy efficiency control.

In some implementations, the first information is associated with the terminal device, or the first information is associated with a QoS flow.

In some implementations, the first information is carried in a third request message. The third request message includes one or more of: a request message for requesting to establish contextual information of the terminal device, a request message for requesting to modify contextual information of the terminal device, a request message for requesting to establish a QoS flow, and a request message for requesting to modify a QoS flow.

In some implementations, the first energy efficiency mode includes one or more of: a communication mode in which importance of the network energy efficiency is higher than that of communication performance, a communication mode in which the network energy efficiency and the communication performance are balanced, and a communication mode in which the network energy efficiency is reduced.

FIG. 13 is a schematic diagram of a communication device in embodiments of the disclosure. A communication device 1300 illustrated in FIG. 13 is an AN device. The communication device 1300 includes a receiving unit 1310.

The receiving unit 1300 is configured to receive second information sent by a first core network device. The second information is used to subscribe to a first event associated with the first information. The first event is used to determine network energy efficiency.

In some implementations, the communication device further includes: a sending unit, configured to send third information which carrying a monitoring result of the first event to the first core network device. The third information is used to determine a control strategy, and the control strategy is used to adjust the network energy efficiency.

In some implementations, the first event includes one or more of: an event for monitoring energy efficiency of a terminal device, an event for monitoring energy efficiency of the an AN device serving the terminal device, an event for monitoring energy efficiency in providing service transmission for the terminal device, an event for monitoring energy efficiency in providing service transmission for some or all terminal devices associated with a QoS flow, and an event for monitoring energy efficiency of a network slice associated with a QoS flow. The terminal device is associated with the first information, and/or the QoS flow is associated with the first information.

FIG. 14 is a schematic structural diagram of a communication apparatus in embodiments of the disclosure. Dashed lines in FIG. 14 indicate that a unit or a module is optional. An apparatus 1400 is configured to perform the methods described in the aforementioned method embodiments. The apparatus 1400 may be a chip, a terminal device, or a network device.

The apparatus 1400 may include one or more processors 1410. The processor 1410 can support the apparatus 1400 to perform the methods described in the aforementioned method embodiments. The processor 1410 may be a general-purpose processor or a dedicated processor. For example, the processor may be a central processing unit (CPU). Or, the processor may be other general-purpose processors, a digital signal processor (DSP), an application specific integrated circuit (ASIC), a field programmable gate array (FPGA), or other programmable logic devices, discrete gate or transistor logic devices, discrete hardware components, etc. A general-purpose processor may be a microprocessor, or the processor may be any conventional processor, etc.

The apparatus 1400 may further include one or more memories 1420. A computer program is stored in the memory 1420. The program can be executed by the processor 1410, to cause the processor 1410 to perform the methods described in the aforementioned method embodiments. The memory 1420 may be independent of the processor 1410, or may be integrated into the processor 1410.

The apparatus 1400 may further include a transceiver 1430. The processor 1410 can communicate with other devices or chips through the transceiver 1430. For example, the processor 1410 can send and receive data with other devices or chips via the transceiver 1430.

A computer-readable storage medium is further provided in embodiments of the disclosure. The computer-readable storage medium is configured to store computer programs. The computer-readable storage medium can be applied to the terminal or the network device provided in embodiments of the disclosure. The computer programs are operable with a computer to perform the methods implemented by the terminal or the network device in each embodiment of the disclosure.

A computer program product is further provided in embodiments of the disclosure. The computer program product includes computer programs. The computer program product can be applied to the terminal or the network device provided in embodiments of the disclosure. The computer programs are operable with the computer to perform the methods implemented by the terminal or the network device in each embodiment of the disclosure.

A computer program is further provided in embodiments of the disclosure. The computer program can be applied to the terminal or the network device provided in embodiments of the disclosure. The computer program is operable with the computer to perform the methods implemented by the terminal or the network device in each embodiment of the disclosure.

It can be understood that, the terms "system" and "network" herein are usually used interchangeably throughout the disclosure. Terms used in the disclosure are merely intended for explaining embodiments of the disclosure rather than limiting the disclosure. The terms "first", "second", "third", "fourth", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion.

In embodiments of the disclosure, the referred "indication" may be a direct indication, may be an indirect indication, or may mean that there is an association relationship. For example, *A* indicates *B* may mean that *A* directly indicates *B,* for instance, *B* can be obtained according to *A;* may mean that *A* indirectly indicates *B,* for instance, *A* indicates C, and *B* can be obtained according to C; or may mean that that there is an association relationship between *A* and *B.*

In embodiments of the disclosure, *"B* corresponding to *A"* indicates that *B* is associated with *A,* and *B* may be determined according to *A.* However, it can be further understood that, "determine *B* according to *A"* does not mean that *B* is determined according to *A* only, and *B* may also be determined according to *A* and/or other information.

In embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

In various embodiments of the disclosure, the magnitude of a sequence number of each of the aforementioned processes does not imply an execution order, and the execution order between the processes should be determined according to function and internal logic thereof, which shall not constitute any limitation to the implementation of embodiments of the disclosure.

It can be understood that, the systems, devices and methods disclosed in several embodiments provided in the disclosure may also be implemented in various other manners. For example, the above apparatus implementations are merely illustrative, e.g., the division of units is only a division of logical functions, and other manners of division may be available in practice, e.g., multiple modules may be combined or may be integrated into another system, or some features may be ignored or skipped. In other respects, the coupling or direct coupling or communication connection as illustrated or discussed may be an indirect coupling or communication connection through some interface or module, and may be electrical, mechanical, or otherwise.

Units illustrated as separated components may or may not be physically separated. Components displayed as units may or may not be physical units, and may reside at one location or may be distributed to multiple networked units. Some or all of the units may be selectively adopted according to practical needs to achieve desired objectives of the solutions of embodiments.

In addition, various functional units described in various embodiments of the disclosure may be integrated into one processing unit or may be present as a number of physically separated units, and two or more units may be integrated into one.

All or some of the aforementioned embodiments can be implemented through software, hardware, firmware, or any other combination thereof. When implemented by software, all or some of the aforementioned embodiments can be implemented in the form of a computer program product. The computer program product includes one or more computer instructions. When the computer instructions are applied and executed on a computer, all or some of the operations or functions of the embodiments of the disclosure are performed. The computer can be a general-purpose computer, a dedicated computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The aforementioned are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
receiving or sending, by a first core network device, first information, wherein the first information is used to indicate one or more of:
whether a first communication service is supported; and
a first energy efficiency mode controlling the first communication service;
wherein the first communication service is based on network energy efficiency control.

2. The method of claim 1, wherein receiving or sending, by the first core network device, the first information, comprises:
receiving, by the first core network device, the first information sent by a terminal device, wherein the first information is associated with the terminal device, or the first information is associated with a service data flow.

3. The method of claim 2, wherein the first information is carried in a first request message, and the first request message comprises one or more of:
a request message for requesting to register the terminal device;
a request message for requesting to establish a protocol data unit (PDU) session; and
a request message for requesting to modify the PDU session.

4. The method of claim 1, wherein the first information is authorized information, and receiving or sending, by the first core network device, the first information, comprises:
sending, by the first core network device, a second request message to a second core network device, wherein the second request message is used to request authorization for unauthorized first information; and the method further comprises:
receiving, by the first core network device, a response message sent by the second core network device, wherein the response message carries the first information.

5. The method of claim 1, wherein receiving or sending, by the first core network device, the first information, comprises:
receiving, by the first core network device, the first information sent by a second core network device, wherein the first information is associated with a service data flow.

6. The method of claim 5, wherein the first information has been authorized by the second core network device.

7. The method of claim 1, wherein receiving or sending, by the first core network device, the first information, comprises:
sending, by the first core network device, the first information to an access network (AN) device, wherein the first information is associated with a terminal device, or the first information is associated with a quality of service (QoS) flow.

8. The method of claim 7, wherein the first information is carried in a third request message, and the third request message comprises one or more of:
a request message for requesting to establish contextual information of the terminal device;
a request message for requesting to modify the contextual information of the terminal device;
a request message for requesting to establish the QoS flow; and
a request message for requesting to modify the QoS flow.

9. The method of claim 7 or 8, wherein before sending, by the first core network device, the first information to the AN device, the method further comprises:
determining, by the first core network device, the QoS flow associated with a service data flow; and
associating, by the first core network device, the first information with the QoS flow.

10. The method of claim 1, wherein receiving or sending, by the first core network device, the first information, comprises:
sending, by the first core network device, the first information to a second core network device; and the method further comprises:
receiving, by the first core network device, second information sent by the second core network device, wherein the second information is used to subscribe to a first event associated with the first information, and the first event is used to determine the network energy efficiency.

11. The method of claim 10, further comprising:
sending, by the first core network device, the second information to an access network (AN) device.

12. The method of claim 11, further comprising:
receiving, by the first core network device, third information sent by the AN device, wherein the third information comprises a monitoring result of the first event; and/or
sending, by the first core network device, the third information to the second core network device, wherein the third information is used to determine a control strategy, and the control strategy is used to adjust network energy efficiency.

13. The method of any one of claims 10 to 12, wherein the first event comprises one or more of:
an event for monitoring energy efficiency of a terminal device;
an event for monitoring energy efficiency of an AN device serving the terminal device;
an event for monitoring energy efficiency in providing service transmission for the terminal device;
an event for monitoring energy efficiency in providing service transmission for some or all terminal devices associated with a QoS flow; and
an event for monitoring energy efficiency of a network slice associated with the QoS flow;
wherein the terminal device is associated with the first information, and/or the QoS flow is associated with the first information.

14. The method of any one of claims 1 to 13, wherein the first energy efficiency mode comprises one or more of:
a communication mode in which importance of the network energy efficiency is higher than that of communication performance;
a communication mode in which the network energy efficiency and the communication performance are balanced; and
a communication mode in which the network energy efficiency is reduced.

15. A wireless communication method, comprising:
receiving or sending, by a second core network device, first information, wherein the first information is used to indicate one or more of:
whether a first communication service is supported; and
a first energy efficiency mode controlling the first communication service;
wherein the first communication service is based on network energy efficiency control.

16. The method of claim 15, wherein receiving or sending, by the second core network device, the first information, comprises:
receiving, by the second core network device, the first information sent by a first core network device, wherein the first information is associated with a terminal device, or the first information is associated with a service data flow.

17. The method of claim 16, wherein the first information is authorized information, and receiving, by the second core network device, the first information sent by the first core network device, comprises:
receiving, by the second core network device, a second request message sent by the first core network device, wherein the second request message is used to request authorization for unauthorized first information; and the method further comprises:
sending, by the second core network device, a response message to the first core network device, wherein the response message carries the first information.

18. The method of claim 15, wherein receiving or sending, by the second core network device, the first information, comprises:
receiving, by the second core network device, the first information sent by an application function (AF), wherein the first information is associated with a service data flow.

19. The method of claim 15, wherein receiving or sending, by the second core network device, the first information, comprises:
sending, by the second core network device, the first information to a first core network device, wherein the first information is associated with a service data flow.

20. The method of claim 18 or 19, wherein the first information has been authorized by the second core network device.

21. The method of claim 15, wherein in case of receiving, by the second core network device, the first information, the method further comprises:
sending, by the second core network device, second information to a first core network device, wherein the second information is used to subscribe to a first event associated with the first information, and the first event is used to determine the network energy efficiency.

22. The method of claim 21, wherein receiving, by the second core network device, the first information, comprises:
receiving, by the second core network device, the first information sent by the first core network device; or
receiving, by the second core network device, the first information sent by an AF.

23. The method of claim 21 or 22, further comprising:
receiving, by the second core network device, third information sent by the first core network device, wherein the third information carries a monitoring result of the first event; and
determining, by the second core network device, a control strategy, based on the third information, wherein the control strategy is used to adjust the network energy efficiency.

24. The method of any one of claims 21 to 23, wherein the first event comprises one or more of:
an event for monitoring energy efficiency of a terminal device;
an event for monitoring energy efficiency of an access network (AN) device serving the terminal device;
an event for monitoring energy efficiency in providing service transmission for the terminal device;
an event for monitoring energy efficiency in providing service transmission for some or all terminal devices associated with a quality of service (QoS) flow; and
an event for monitoring energy efficiency of a network slice associated with the QoS flow;
wherein the terminal device is associated with the first information, and/or the QoS flow is associated with the first information.

25. The method of any one of claims 15 to 24, wherein the first energy efficiency mode comprises one or more of:
a communication mode in which importance of the network energy efficiency is higher than that of communication performance;
a communication mode in which the network energy efficiency and the communication performance are balanced; and
a communication mode in which the network energy efficiency is reduced.

26. A wireless communication method, comprising:
sending, by a first device, first information, wherein the first device is a terminal device or an application function (AF), and the first information is used to indicate one or more of:
whether a first communication service is supported; and
a first energy efficiency mode controlling the first communication service;
wherein the first communication service is based on network energy efficiency control.

27. The method of claim 26, wherein the first device is the terminal device, and sending, by the first device, the first information comprises:
sending, by the terminal device, the first information to a first core network device, wherein the first information is associated with the terminal device, or the first information is associated with a service data flow.

28. The method of claim 26, wherein the first device is the AF, and sending, by the first device, the first information comprises:
sending, by the AF, the first information, to a second core network device, wherein the first information is associated with a service data flow.

29. The method of any one of claims 26 to 28, wherein the first energy efficiency mode comprises one or more of:
a communication mode in which importance of the network energy efficiency is higher than that of communication performance;
a communication mode in which the network energy efficiency and the communication performance are balanced; and
a communication mode in which the network energy efficiency is reduced.

30. A wireless communication method, comprising:
receiving, by an access network (AN) device, first information sent by a first core network device, wherein the first information is used to indicate one or more of:
whether a first communication service is supported; and
a first energy efficiency mode controlling the first communication service;
wherein the first communication service is based on network energy efficiency control.

31. The method of claim 30, wherein the first information is associated with a terminal device, or the first information is associated with a quality of service (QoS) flow.

32. The method of claim 30 or 31, wherein the first information is carried in a third request message, and the third request message comprises one or more of:
a request message for requesting to establish contextual information of the terminal device;
a request message for requesting to modify the contextual information of the terminal device;
a request message for requesting to establish the QoS flow; and
a request message for requesting to modify the QoS flow.

33. The method of any one of claims 30 to 32, wherein the first energy efficiency mode comprises one or more of:
a communication mode in which importance of the network energy efficiency is higher than that of communication performance;
a communication mode in which the network energy efficiency and the communication performance are balanced; and
a communication mode in which the network energy efficiency is reduced.

34. A wireless communication method, comprising:
receiving, by an access network (AN) device, second information sent by a first core network device, wherein the second information is used to subscribe to a first event associated with first information, and the first event is used to determine network energy efficiency.

35. The method of claim 34, further comprising:
sending, by the AN device, third information carrying a monitoring result of the first event to the first core network device, wherein the third information is used to determine a control strategy, and the control strategy is used to adjust the network energy efficiency.

36. The method of claim 34 or 35, wherein the first event comprises one or more of:
an event for monitoring energy efficiency of a terminal device;
an event for monitoring energy efficiency of an AN device serving the terminal device;
an event for monitoring energy efficiency in providing service transmission for the terminal device;
an event for monitoring energy efficiency in providing service transmission for some or all terminal devices associated with a quality of service (QoS) flow; and
an event for monitoring energy efficiency of a network slice associated with the QoS flow;
wherein the terminal device is associated with the first information, and/or the QoS flow is associated with the first information.

37. A communication device, wherein the communication device is a first core network device and comprises:
a communication unit configured to receive or send first information, wherein the first information is used to indicate one or more of:
whether a first communication service is supported; and
a first energy efficiency mode controlling the first communication service;
wherein the first communication service is based on network energy efficiency control.

38. The communication device of claim 37, wherein the communication unit is configured to:
receive the first information sent by a terminal device, wherein the first information is associated with the terminal device, or the first information is associated with a service data flow.

39. The communication device of claim 38, wherein the first information is carried in a first request message, and the first request message comprises one or more of:
a request message for requesting to register the terminal device;
a request message for requesting to establish a protocol data unit (PDU) session; and
a request message for requesting to modify the PDU session.

40. The communication device of claim 37, wherein the first information is authorized information; the communication unit is configured to:
send a second request message to a second core network device, wherein the second request message is used to request authorization for unauthorized first information; and
receive a response message sent by the second core network device, wherein the response message carries the first information.

41. The communication device of claim 37, wherein the communication unit is configured to:
receive the first information sent by a second core network device, wherein the first information is associated with a service data flow.

42. The communication device of claim 41, wherein the first information has been authorized by the second core network device.

43. The communication device of claim 37, wherein the communication unit is configured to:
send the first information to an access network (AN) device, wherein the first information is associated with a terminal device, or the first information is associated with a quality of service (QoS) flow.

44. The communication device of claim 43, wherein the first information is carried in a third request message, and the third request message comprises one or more of:
a request message for requesting to establish contextual information of the terminal device;
a request message for requesting to modify the contextual information of the terminal device;
a request message for requesting to establish the QoS flow; and
a request message for requesting to modify the QoS flow.

45. The communication device of claim 43 or 44, further comprising:
a processing unit configured to determine the QoS flow associated with a service data flow, and associate the first information with the QoS flow.

46. The communication device of claim 37, wherein the communication unit is configured to:
send the first information to a second core network device; and
receive second information sent by the second core network device, wherein the second information is used to subscribe to a first event associated with the first information, and the first event is used to determine the network energy efficiency.

47. The communication device of claim 46, wherein the communication unit is configured to:
send the second information to an access network (AN) device.

48. The communication device of claim 47, wherein the communication unit is configured to:
receive third information sent by the AN device, wherein the third information comprises a monitoring result of the first event; and/or
send the third information to the second core network device, wherein the third information is used to determine a control strategy, and the control strategy is used to adjust network energy efficiency.

49. The communication device of any one of claims 46 to 48, wherein the first event comprises one or more of:
an event for monitoring energy efficiency of a terminal device;
an event for monitoring energy efficiency of an AN device serving the terminal device;
an event for monitoring energy efficiency in providing service transmission for the terminal device;
an event for monitoring energy efficiency in providing service transmission for some or all terminal devices associated with a QoS flow; and
an event for monitoring energy efficiency of a network slice associated with the QoS flow;
wherein the terminal device is associated with the first information, and/or the QoS flow is associated with the first information.

50. The communication device of any one of claims 37 to 49, wherein the first energy efficiency mode comprises one or more of:
a communication mode in which importance of the network energy efficiency is higher than that of communication performance;
a communication mode in which the network energy efficiency and the communication performance are balanced; and
a communication mode in which the network energy efficiency is reduced.

51. A communication device, wherein the communication device is a second core network device, comprises:
a communication unit configured to receive or send first information, wherein the first information is used to indicate one or more of:
whether a first communication service is supported; and
a first energy efficiency mode controlling the first communication service;
wherein the first communication service is based on network energy efficiency control.

52. The communication device of claim 51, wherein the communication unit is configured to receive the first information sent by a first core network device, and the first information is associated with a terminal device, or the first information is associated with a service data flow.

53. The communication device of claim 16, wherein the first information is authorized information; the communication unit is configured to:
receive a second request message sent by the first core network device, wherein second request message is used to request authorization for unauthorized first information; and
send a response message to the first core network device, wherein the response message carries the first information.

54. The communication device of claim 51, wherein the communication unit is configured to receive the first information sent by an application function (AF), and the first information is associated with a service data flow.

55. The communication device of claim 51, wherein the communication unit is configured to send the first information to the first core network device, and the first information is associated with a service data flow.

56. The communication device of claim 54 or 55, wherein the first information has been authorized by the second core network device.

57. The communication device of claim 51, wherein in case of the first information being received by the second core network device, the communication unit is configured to send second information to a first core network device, the second information is used to subscribe to a first event associated with the first information, and the first event is used to determine the network energy efficiency.

58. The communication device of claim 57, wherein the communication unit is configured to:
receive the first information sent by the first core network device, or receive the first information sent by an AF.

59. The communication device of claim 57 or 58, wherein the communication unit is configured to:
receive third information sent by the first core network device, wherein the third information carries a monitoring result of the first event; and
determine a control strategy based on the third information, wherein the control strategy is used to adjust the network energy efficiency.

60. The communication device of any one of claims 57 to 59, wherein the first event comprises one or more of:
an event for monitoring energy efficiency of a terminal device;
an event for monitoring energy efficiency of an access network (AN) device serving the terminal device;
an event for monitoring energy efficiency in providing service transmission for the terminal device;
an event for monitoring energy efficiency in providing service transmission for some or all terminal devices associated with a quality of service (QoS) flow; and
an event for monitoring energy efficiency of a network slice associated with the QoS flow;
wherein the terminal device is associated with the first information, and/or the QoS flow is associated with the first information.

61. The communication device of any one of claims 51 to 60, wherein the first energy efficiency mode comprises one or more of:
a communication mode in which importance of the network energy efficiency is higher than that of communication performance;
a communication mode in which the network energy efficiency and the communication performance are balanced; and
a communication mode in which the network energy efficiency is reduced.

62. A communication device, wherein the communication device is a first device and comprises:
a communication unit configured to send first information, wherein the first device is a terminal device or an application function (AF), and the first information is used to indicate one or more of:
whether a first communication service is supported; and
a first energy efficiency mode controlling the first communication service;
wherein the first communication service is based on network energy efficiency control.

63. The communication device of claim 62, wherein the first device is the terminal device, and the communication unit is configured to:
send the first information to a first core network device, wherein the first information is associated with the terminal device, or the first information is associated with a service data flow.

64. The communication device of claim 62, wherein the first device is the AF, and the communication unit is configured to:
send the first information to a second core network device, wherein the first information is associated with a service data flow.

65. The communication device of any one of claims 62 to 64, wherein the first energy efficiency mode comprises one or more of:
a communication mode in which importance of the network energy efficiency is higher than that of communication performance;
a communication mode in which the network energy efficiency and the communication performance are balanced; and
a communication mode in which the network energy efficiency is reduced.

66. A communication device, wherein the communication device is an access network (AN) device and comprises:
a receiving unit configured to receive first information sent by a first core network device, wherein the first information is used to indicate one or more of:
whether a first communication service is supported; and
a first energy efficiency mode controlling the first communication service;
wherein the first communication service is based on network energy efficiency control.

67. The communication device of claim 66, wherein the first information is associated with a terminal device, or the first information is associated with a quality of service (QoS) flow.

68. The communication device of claim 66 or 67, wherein the first information is carried in a third request message, and the third request message comprises one or more of:
a request message for requesting to establish contextual information of the terminal device;
a request message for requesting to modify the contextual information of the terminal device;
a request message for requesting to establish the QoS flow; and
a request message for requesting to modify the QoS flow.

69. The communication device of any one of claims 66 to 68, wherein the first energy efficiency mode comprises one or more of:
a communication mode in which importance of the network energy efficiency is higher than that of communication performance;
a communication mode in which the network energy efficiency and the communication performance are balanced; and
a communication mode in which the network energy efficiency is reduced.

70. A communication device, wherein the communication device is an access network (AN) device and comprises:
a receiving unit configured to receive second information sent by a first core network device, wherein the second information is used to subscribe to a first event associated with the first information, and the first event is used to determine network energy efficiency.

71. The communication device of claim 70, further comprising:
a sending unit configured to send third information carrying a monitoring result of the first event to the first core network device, wherein the third information is used to determine a control strategy, and the control strategy is used to adjust the network energy efficiency.

72. The communication device of claim 70 or 71, wherein the first event comprises one or more of:
an event for monitoring energy efficiency of a terminal device;
an event for monitoring energy efficiency of an AN device serving the terminal device;
an event for monitoring energy efficiency in providing service transmission for the terminal device;
an event for monitoring energy efficiency in providing service transmission for some or all terminal devices associated with a quality of service (QoS) flow; and
an event for monitoring energy efficiency of a network slice associated with the QoS flow;
wherein the terminal device is associated with the first information, and/or the QoS flow is associated with the first information.

73. A communication device, comprising a transceiver, a processor, and a memory, wherein the memory is configured to store computer programs, the processor is configured to invoke the computer programs stored in the memory, and to control the transceiver to receive or send signals, to cause the communication device to perform the method of any one of claims 1 to 36.

74. An apparatus, comprising a processor, wherein the processor is configured to invoke computer programs stored in a memory, to cause the apparatus to perform the method of any one of claims 1 to 36.

75. A chip, comprising a processor, wherein the processor is configured to invoke and execute computer programs stored in a memory, to cause a device equipped with the chip to perform the method of any one of claims 1 to 36.

76. A computer-readable storage medium configured to store computer programs, wherein the computer programs are operable with a computer to perform the method of any one of claims 1 to 36.

77. A computer program product, comprising computer programs, wherein the computer programs are operable with a computer to perform the method of any one of claims 1 to 36.

78. A computer program which is operable with a computer to perform the method of any one of claims 1 to 36.
